# EUROPÄISCHE PATENTSCHRIFT

(11) **EP 3 646 427 B1**
(45) Veröffentlichungstag und Bekanntmachung des Hinweises auf die Patenterteilung: **20.07.2022**
(21) Anmeldenummer: 18734818.0
(22) Anmeldetag: 29.06.2018
(51) Int. Cl.: H02H 9/00, H02P 9/08

(54) **VERFAHREN UND VORRICHTUNG ZUM ELEKTRISCHEN VERBINDEN EINES TRANSFORMATORS MIT EINEM ELEKTRISCHEN NETZ**
METHOD AND APPARATUS FOR ELECTRICALLY CONNECTING A TRANSFORMER TO AN ELECTRICAL NETWORK
PROCÉDÉ ET DISPOSITIF POUR LA CONNEXION ÉLECTRIQUE D'UN TRANSFORMATEUR À UN RÉSEAU ÉLECTRIQUE

(30) Priorität: 30.06.2017 DE 102017114653
(43) Veröffentlichungstag der Anmeldung: 06.05.2020
(73) Patentinhaber: Wobben Properties GmbH, 26607 Aurich (DE)
(72) Erfinder: DILL, Philipp Marco, 26871 Aschendorf (DE)
(74) Vertreter: Eisenführ Speiser
(86) Internationale Anmeldenummer: PCT/EP2018/067518
(87) Internationale Veröffentlichungsnummer: WO 2019/002528

(56) Entgegenhaltungen:
- EP-A1- 3 157 114
- DE-A1- 2 530 047
- DE-C1- 4 307 291
- US-A- 2 710 356

## Beschreibung

Die vorliegende Erfindung betrifft ein Verfahren zum elektrischen Verbinden eines Transformators mit einem eine Netzspannung aufweisenden elektrischen Netz. Die vorliegende Erfindung betrifft auch eine Kopplungsanordnung zum elektrischen Verbinden des Transformators mit einem elektrischen Netz. Die vorliegende Erfindung betrifft auch eine Windenergieanlage und sie betriff einen Windpark mit mehreren Windenergieanlagen.

Transformatoren werden in elektrischen Versorgungsnetzen zum Verbinden verschiedener Spannungsebenen verwendet. Dabei werden Transformatoren u.a. auch in Windparks dazu verwendet, Windenergieanlagen mit dem Windparknetz zu verbinden oder den gesamten Windpark an das öffentliche Versorgungsnetz anzuschließen.

Beim elektrischen Verbinden des Transformators an ein spannungsführendes Netz können dabei ungewollte und hohe Einschaltströme auftreten. Diese auch allgemein als Inrush-Ströme bezeichneten Einschaltströme des Transformators können dabei eine starke und ungewollte Belastung für das elektrische Versorgungsnetz darstellen. Solche Einschaltströme entstehen beim Zuschalten des Transformators durch Magnetisierungsvorgänge bzw. magnetische Sättigungsvorgänge des Eisenkernes.

Aufgrund der steigenden Anzahl der dezentralen Energieerzeuger im elektrischen Versorgungsnetz steigt die Anzahl der Transformatoren, die an das elektrische Versorgungsnetz gekoppelt werden und einen Inrush-Strom erzeugen können.

Somit steigt auch der Einfluss von Inrush-Strömen auf elektrische Versorgungsnetze mehr und mehr, da die dezentralen Energieerzeuger vermehrt die großen zentralen Energieerzeuger ersetzen.

Besonders stark ist der Inrush-Effekt beim Einschalten von unbelasteten Transformatoren ausgeprägt. Werden diese Transformatoren an das Netz unter Spannung angekoppelt, entstehen besonders stark ausgeprägte Einschaltströme (engl.: Inrush-Current) die von der Baugröße des Transformators abhängig sind. Bei Transformatoren in einem Leistungsbereich von etwa 1-4MVA können diese Einschaltströme etwa bei 7 bis 9-fachen des Nennstroms des WEA-Transformators liegen.

Bestimmend für den Inrush-Strom sind dabei im Wesentlichen die zwei wichtigsten Faktoren Remanenz und Einschaltzeitpunkt, zu dem der elektrische Transformator an das Netz gekoppelt wird.

Als Remanenz wird dabei auch der Restmagnetismus verstanden, der in einem Transformator vorhanden ist. Je nachdem, zu welchem Zeitpunkt der Transformator ausgeschaltet wurde, bleibt ein unterschiedlicher Restmagnetismus im Kern des Transformators zurück, der zumeist auch unbekannt ist.

Wird ein Transformator dann zu einem willkürlichen Zeitpunkt mit dem Versorgungsnetz verbunden, kann der Fall eintreten, dass der Transformator in Bezug auf die Remanenz, die sich durch den Ausschaltzeitpunkt ergibt, zu einer ungünstigen Phasenlage der Netzspannung eingeschaltet wird.

Befindet sich der Transformator dabei nämlich in einem unbekannten magnetischen Zustand, kann es vorkommen, dass der Transformator durch die ungünstige Phasenlage der Netzspannung in starke Sättigung getrieben wird und dabei einen sehr hohen Magnetisierungsstrom führt. Dieser hohe Strom entsteht insbesondere beim Einschalten und wird hier als Einschaltstrom oder Inrush-Strom bezeichnet.

Dieser ungünstige Fall ist besonders relevant, wenn Windenergieanlagen mit sehr großer Leistung oder ganze Windparks an einen Netzanschlusspunkt mit geringer Kurzschlussleistung angeschlossen werden. In diesen Gebieten kann eine Zuschaltung eines großen Transformators bzw. Verteiltransformator einen signifikanten negativen Einfluss auf die Spannungsqualität des örtlichen Versorgungsnetzes haben.

Um das Problem zu lösen, sind Verfahren bekannt, die einen betreffenden Transformator ständig überwachen und zwar so, dass sie genau erkennen, wie und zu was für einer Phasenlage der Netzspannung der Transformator vom elektrischen Versorgungsnetz getrennt wird. Daraus wird dann abgeleitet, wie die Remanenz in dem Transformator ist. Mit dieser bekannten Remanenz kann dann ein Wiedereinschalten des Transformators so durchgeführt werden, dass das Wiedereinschalten gut zur Remanenz passt, um dadurch Inrush-Ströme möglichst gering zu halten.

Das hat aber besonders den Nachteil, dass eine solche Überwachung aufwändig ist und das Wiedereinschalten dann nach jedem Ausschalten individuell auf die erfasste Remanenz angepasst werden muss.

Das Deutsche Patent- und Markenamt hat in der Prioritätsanmeldung zu vorliegender Anmeldung folgenden Stand der Technik recherchiert: DE 43 09 484 C1, DE 10 2007 057 236 A1, DE 976 192 B, den Artikel von Michael Konstanzer "Transformatoren ohne Stromstoß einschalten - Sanfter Start", Zeitschrift Design & Elektronik, 01/2002, Seiten 68-69 und den Artikel von Michael Konstanzer "Auf die sanfte Art - Das Einschalten von induktiven Lasten, Zeitschrift Elektronik, 19/1994, Seiten 86-92.

Ein Verfahren zur Reduzierung des Einschaltstroms einer induktiven Last, wobei das Verfahren für das Zuschalten von Transformatoren anwendbar ist, ist aus EP 2 157 114 A1 bekannt. DE 43 07 291 C1 und DE 25 30 047 A1 ebenfalls offenbaren Verfahren zur Reduzierung des Einschaltstromstoßes beim Anschalten von Transformatoren an eine Wechselspannungsquelle.

Aufgabe der vorliegenden Erfindung ist es somit, zumindest eines der oben genannten

Probleme zu adressieren. Insbesondere soll eine Lösung vorgeschlagen werden, die zumindest eine Reduzierung des Inrush-Stroms bewirkt, wenn ein Transformator an das elektrische Versorgungsnetz angeschlossen wird. Zumindest soll zu bisher bekannten Lösungen eine alternative Lösung vorgeschlagen werden.

Erfindungsgemäß wird somit ein Verfahren nach Anspruch 1 vorgeschlagen. Dies ist zum elektrischen Verbinden eines Transformators mit einem elektrischen Netz vorgesehen, insbesondere einem elektrischen Versorgungsnetz. Dabei weist das elektrische Netz eine dreiphasige Wechselspannung auf, die typischerweise in Windparks bei 20kV oder in einem Mittelspannungsnetz bei etwa 1-50kV liegt. Um den Transformator mit dem elektrischen Netz zu verbinden, wird eine Leistungsschalteinrichtung verwendet, die den Transformator bzw. eine Seite des Transformators mit dem elektrischen Netz verbindet. Dabei wird als Leistungsschalteinrichtung ein geeigneter Schalter verwendet, der in den zuvor genannten Spannungsbereichen verwendet werden kann, wie bspw. ein Leistungsschalter. Ein Leistungsschalter kann dabei im Gegensatz zu einem Lastschalter hohe Betriebsströme und Überlastströme schalten und ist daher geeignet den Transformator an das elektrische Netz anzuschließen. Von Vorteil ist auch die besonders schnelle Reaktionszeit dieser Schaltergruppe, die ein sofortiges, oder leicht verzögertes, Ein- und Ausschalten ermöglichen. Andere geeignete Schalter wie Lastschalter können dabei aber ebenso verwendet werden, wenn das Schaltvermögen und die Reaktionszeit des jeweiligen Schalters den Einsatz am Einsatzort zulässt.

Zudem weißt der Transformator eine Primärseite und eine netzseitige Sekundärseite auf. Bspw. könnte ein solcher Transformator mit der Primärseite an ein Windparknetz und netzseitig auf der Sekundärseite über die Leistungsschalteinrichtung mit dem elektrischen Versorgungsnetz verbunden sein. Demnach verbindet der Transformator ganz generell zwei Netzabschnitte. In dem beschriebenen Fall also ein Windparknetz mit dem elektrischen Versorgungsnetz (Öffentliches Netz), wobei die beiden Netzabschnitte eine unterschiedliche Spannungsebene aufweisen. Der Transformator kann primärseitig aber auch direkt, also nicht über ein Parknetz, mit einer Windenergieanlage verbunden sein.

Dabei erfolgt das elektrische Verbinden des Transformators mit dem eine Netzspannung aufweisenden elektrischen Netzes über die Leistungsschalteinrichtung wie folgt:
In einem ersten Schritt wird der Transformator vormagnetisiert und kann damit in einen vorbestimmten, magnetischen bzw. magnetisierten Zustand gebracht werden. Die Begriffe magnetischer Zustand und magnetisierter Zustand werden hier als synonyme verstanden und bezeichnen den Zustand, der durch das Vormagnetisieren erreicht wird. Das Vormagnetisieren kann auch als Aufmagnetisieren bezeichnet werden.

Bevor der Transformator somit an das elektrische Netz gekoppelt wird, wird vorgeschlagen, den Transformator in einen vorbestimmten magnetischen Zustand zu überführen. Somit wird der Transformator, egal welchen magnetischen Zustand bzw. welche Restmagnetisierung (Remanenz) der Transformator zuvor aufgewiesen hat, in einen magnetischen Zustand gebracht, der dadurch hinreichend bekannt ist.

In einem zweiten Schritt wird ein Phasenwinkelverlauf der Netzspannung erfasst. Dem liegt eine Betrachtung der Netzspannung als etwa sinusförmiges Spannungssignal zu Grunde, das einen sich ständig ändernden Phasenwinkel aufweist. Dieser Phasenwinkel wird erfasst, so dass die absolute, zeitliche Lage des sinusförmigen Verlaufs der Netzspannung bekannt ist, Gemäß einer besonderen Ausführungsform wird der Phasenwinkelverlauf an nur einer von drei Phasen des elektrischen Netzes erfasst. Durch diese Erfassung ist der entsprechende Phasenwinkelverlauf und damit der aktuelle, momentane Phasenwinkel bekannt und kann zum Koordinieren des elektrischen Verbindens des Transformators mit dem Netz verwendet werden. Das Erfassen des Phasenwinkelverlaufs kann auch so erfolgen, dass eine genaue Zeit jeweils eines Nulldurchgangs des Spannungssignals erfasst wird und damit bei bekannter oder erfasster Frequenz des Spannungssignals der Phasenwinkelverlauf insgesamt bekannt ist, zumindest für die folgende Periode.

In einem dritten Schritt wird der Transformator mit dem elektrischen Netz verbunden. Das Verbinden, nämlich durch Schließen der Leistungsschalteinrichtung, erfolgt somit unter Spannung. Die elektrische Verbindung wird dabei durch die Leistungsschalteinrichtung hergestellt, die automatisiert betätigt werden kann bzw. ansteuerbar ist. Die Leistungsschalteinrichtung schließt also entsprechende Schalter.

Dabei erfolgt das Schließen durch die Leistungsschalteinrichtung in Abhängigkeit des vorbestimmten magnetisierten Zustands des Transformators, also der Remanenz des Transformators sowie in Abhängigkeit des zuvor erfassten Phasenwinkelverlaufs der Netzspannung, insbesondere nämlich zu einem ausgewählten Phasenwinkel des Phasenwinkelverlaufs.

Somit schlägt das erfindungsgemäße Verfahren vor, den Transformator in einen vorbestimmten und damit bekannten magnetischen Zustand bzw. magnetisierten Zustand über eine Vormagnetisierung zu bringen, und den Phasenwinkelverlauf der Netzspannung zu messen. Daraufhin wird anhand dieser beiden Kriterien der möglichst günstigste Einschaltzeitpunkt zum elektrischen Verbinden des Transformators ermittelt, um einen möglichst geringen Inrush-Strom zu erzeugen. Der Transformator wird also bei einer geeigneten Lage des Phasenwinkels der Netzspannung mit dem Netz elektrisch verbunden. Besonders vorteilhaft an dem vorgeschlagenen Verfahren ist, dass die Remanenz des Transformators nicht messtechnisch bestimmt werden muss, sondern lediglich der Transformator vormagnetisiert zu werden braucht.

Das erfindungsgemäße Verfahren ermöglicht es somit, dass der Einschaltstrom des Transformators beim Verbinden des Transformators mit einem elektrischen Netz reduziert werden kann, jedenfalls im Vergleich zu einem unkoordinierten Einschalten.

Es wird vorgeschlagen, dass das Schließen zu einem ausgewählten Einschaltwinkel erfolgt und der Einschaltwinkel in Abhängigkeit des vorbestimmten magnetisierten Zustands des Transformators ausgewählt wird. Der Einschaltwinkel ist insoweit ein Winkel des Phasenwinkelverlaufs.

Der Einschaltwinkel beim Einschalten bzw. Schließen der Leistungsschalteinrichtung wird somit auf den Magnetisierungszustand des Transformators abgestimmt. Dazu wird der vorbestimmte Magnetisierungszustand des Transformators zu Grunde gelegt. Davon abhängig ergibt sich ein optimaler oder zumindest vorteilhafter Einschaltwinkel für das Einschalten, nämlich so, wie er ausgewählt wurde. Es wird somit ein vorteilhafter Einschaltwinkel fürs Einschalten bestimmt, zu dem sich im Verbindungsmoment des Transformators der Inrush-Strom möglichst wenig ausbildet. Davon abhängig wird schließlich das Einschalten gesteuert. Die Leistungsschalteinrichtung wird also so angesteuert bzw. initiiert, dass das Schließen dann zu dem vorteilhaften Einschaltwinkel erfolgt. Das Netz bzw. seine Netzspannung wird somit genau zu diesem Einschaltwinkel an der Sekundärseite des Transformators aufgeschaltet.

Das Schließen kann bspw. durch eine unmittelbare Überwachung des Phasenwinkelverlaufs der Netzspannung erfolgen, so dass jeweils beim Vorliegen eines bestimmten Phasenwinkels, also beim Vorliegen des Einschaltwinkels oder kurz vorher, das Schalten ausgelöst wird.

Das Schließen kann zusätzlich oder alternativ gemäß einer Ausführungsform, auch dadurch realisiert werden, dass das Schließen zu einem ausgewählten Einschaltzeitpunkt erfolgt. Dabei wird der Einschaltzeitpunkt bestimmt, zu dem nämlich der vorteilhafte Einschaltwinkel vorliegt. Dann wird zu diesem Einschaltzeitpunkt der Transformator mit dem elektrischen Netz verbunden. Somit wird der Einschaltzeitpunkt in Abhängigkeit des vorbestimmten magnetisierten Zustands des Transformators und in Abhängigkeit des erfassten Phasenwinkelverlaufs ausgewählt, insbesondere so, dass der Einschaltzeitpunkt aus dem Einschaltwinkel bestimmt wird. Dabei wird zum Einschaltzeitpunkt eine elektrische Verbindung durch Schließen der Leistungsschalteinheit zwischen dem Transformator und dem elektrischen Netz hergestellt. Das Netz bzw. seine Netzspannung wird somit zu diesem Einschaltzeitpunkt an der Sekundärseite des Transformators aufgeschaltet. Natürlich ergibt sich bei einer Netzfrequenz von 50Hz fünfzigmal in der Sekunde ein geeigneter Einschaltzeitpunkt für das Einschalten zum Einschaltwinkel. Entsprechend kurzzeitig kann das Einschalten zum Einschaltzeitpunkt umgesetzt werden.

Es wurde somit erkannt, dass die wesentlichen Faktoren, die einen Inrush-Strom hervorrufen, die Remanenz des Transformators sowie die Phasenlage der Netzspannung beim Verbinden sind. Der Inrush-Strom hängt dabei von einer Kombination beider Faktoren ab. Hier wird vorgeschlagen, den einen Faktor, nämlich die Remanenz, vorzugeben, und dann den anderen Faktor, nämlich den Einschaltwinkel bzw. den Einschaltzeitpunkt beim Einschalten, daran anzupassen. Somit ist es möglich, den Transformator zu einem Zeitpunkt einzuschalten, an dem die Netzspannung eine Phasenlage also eine Lage des Phasenwinkels aufweist, bei der der Inrush-Strom gering ausgebildet ist.

Vorzugsweise wird das Vormagnetisieren des Transformators mit einem Magnetisierungsstrom durchgeführt, der von einer Gleichstromquelle wie einem einfachen Schaltnetzteil, einem geladenen Kondensator, oder einer Batterie bereitgestellt werden kann. Die Magnetisierung wird also durch einen Gleichstrom durchgeführt Es bedarf dabei keines großen Stromes. Eine Gleichstromquelle die einen Magnetisierungsstrom von etwa 20A bei einer Spannung von 5V erzeugt, kann bereits geeignet sein. Vorzugsweise wird die Gleichstromquelle an die Spannungsebene angepasst. Gemäß einer Ausführungsform wird vorgeschlagen, für die Gleichspannungsquelle eine Spannung von etwa 1% der Nennspannung zu wählen. Bspw. können bei 400V Nennspannung 5V und 20A für die Gleichstromquelle ausreichen. Die Gleichstromquelle kann somit als relativ einfaches und kostengünstiges Bauteil ausgeführt werden. Ein einfaches Netzteil, kann somit als Gleichstromquelle dienen.

Erfindungsgemäß wird ein dreiphasiger Transformator verwendet.

Dabei weist der dreiphasige Transformator einen ersten, zweiten und dritten Phaseneingang zum Anlegen jeweils einer Spannung gegen einen Bezugspunkt, insbesondere gegen Erde, auf. An diese drei Phaseneingänge kann dabei eine Spannung angelegt werden, insbesondere eine Gleichspannung zum Vormagnetisieren. Je nach Ausführung des Transformators, bspw. als Stern- oder Dreiecktransformator, kann dabei an die drei Phaseneingänge die Spannung zum Vormagnetisieren entsprechend angeschlossen werden.

Erfindungsgemäß ist eine erste Variante zum Anschließen der Spannung, dass die Gleichspannung zwischen dem ersten und dem zweiten Phaseneingang angelegt wird und an dem dritten Phaseneingang keine Spannung angelegt wird. Einer der drei Phaseneingänge ist somit in diesem Beispiel nicht angeschlossen.

Dabei kann auch die Spannungsrichtung der Gleichspannung geändert werden. Eine zweite Variante ergibt sich demnach bei gleicher Verschaltung am Transformator allein durch eine umgedrehte Polarisierung der Gleichspannung.

Zudem können zwei der drei Phaseneingänge untereinander verbunden werden, sodass eine Gleichspannung an zwei Phaseneingängen gleichzeitig anliegt. In dieser erfindungsgemäßen Variante bilden zwei Phaseneingänge somit einen Knoten bzw. Knotenpunkt.

Zudem kann bei einem Transformator mit Sternpunkt auch der Sternpunkt als Anschlusspunkt zum Vormagnetisieren verwendet werden und weist somit dann vier anstatt drei Phaseneingänge auf.

Insgesamt können mit den drei Anschlusspunkten sowie der Spannungsrichtung von Plus nach Minus bzw. von Minus nach Plus insgesamt 12 unterschiedliche Varianten der Verschaltung an dem Transformator realisiert werden. Jede dieser Verschaltungen führt dabei zu einem anderen magnetischen Zustand, da die Schenkel des Transformators durch die jeweils unterschiedliche Verschaltung unterschiedlich vom Magnetisierungsstrom durchflossen werden.

Es wurde erkannt, dass jede Möglichkeit der Verschaltung des Transformators zu einem anderen magnetischen Zustand des Transformators führt, wenn dieser mit dem Magnetisierungsstrom vormagnetisiert wird. In jedem Fall ist der jeweils erreichte magnetische Zustand aber hinreichend bekannt und es kann der Einschaltwinkeldazu passend bestimmt werden. Dadurch kann auch durch die Verschaltung und die Vormagnetisierung des Transformators ein geeigneter Einschaltzeitpunkt festgelegt werden, ohne eine Messung durchzuführen, oder es kann ein Einschaltpunkt bzw. ein Einschaltwinkel gewählt werden und dazu passen eine der möglichen Magnetsierungen vorgenommen werden.

Vorzugsweise wird ein solcher Gleichstrom an der Primärseite angelegt. Dies wird besonders aus isolationstechnischen Gründen vorgeschlagen. Da die Primär- und die Sekundärwicklungen dieselben Magnetkerne verwenden, kann die Magnetisierung an der Primärseite erfolgen und dadurch, bei entsprechender Lage der Spannung beim Einschalten, trotzdem der Inrush-Strom sekundärseitig reduziert bzw. begrenzt werden. Erfolgt die Zuschaltung des vormagnetisierten Transformators dann auf der Sekundärseite, ist eine Phasenverschiebung der Schaltgruppe des Transformators bei der Bestimmung des Einschaltzeitpunktes als Winkeloffset zu beachten. Beispielsweise ist bei einer sogenannten Dyn5 Schaltgruppe eines Dreiphasenwechselstrom-Transformators ein Winkeloffset von 150° zu beachten.

Genauso ist es möglich, die Phaseneingänge an der netzseitigen Sekundärseite des Transformators zum Vormagnetisieren zu verwenden. Da der Transformator dann ebenfalls auf der Sekundärseite zugeschaltet wird, muss hier kein Winkeloffset beachtet werden.

Vorzugsweise wird vorgeschlagen, dass das Vormagnetisieren des Transformators über wenigstens eine Zeitdauer von 0.5, 2 bzw. 10 Sekunden durchgeführt wird. Diese Zeitdauer ist notwendig, um sicher zu gehen, dass der Transformator selbst mit einer ungünstigen Anfangsremanenz den gewollten und bekannten vorbestimmten magnetischen Zustand erreicht.

Zusätzlich oder alternativ wird die Dauer so gewählt, dass wenigstens 50%, der Magnetisierung erreicht werden. Mit der Zeitdauer von 0.5, 2 bzw. 10 Sekunden ist bei üblichen Transformatoren gewährleistet, dass wenigstens 50% der vorbestimmten Magnetisierung im Transformator erreicht werden.

Es wurde erkannt, dass bei Erreichen von wenigstens 50% der vorbestimmten Magnetsierung bereits der Inrush-Strom signifikant reduziert werden kann, im Vergleich zu einem Transformator der bei einer ungünstigen Lage der Netzspannung mit dem Netz verbunden wird. Zudem ist eine Magnetisierung von wenigstens 50% vorteilhaft, da nach einem Abschalten der Gleichstromquelle die Magnetisierung in Abhängigkeit des Kernmaterials abfallen kann bzw. abfällt. Dabei liegt ganz generell der Zusammenhang vor, dass je höher die Remanenz des Transformators zum Einschaltzeitpunkt ist, desto geringer prägt sich der Einschaltstrom aus, wenn im günstigen Einschaltzeitpunkt zugeschaltet wird.

Demnach ist es besonders vorteilhaft bei einer hohen Remanenz des Transformators im günstigen Einschaltzeitpunkt einzuschalten.

Somit ermöglicht das Verfahren zum Verbinden des Transformators mit dem elektrischen Netz eine technisch einfache und robuste Umsetzung um den Inrush-Strom zu reduzieren. Es müssen keine komplizierten Berechnungen und Ermittlungsverfahren zum Bestimmen der Remanenz bspw. basierend auf zeitkritischen Messungen einer zuvor erfolgten Trennung des Transformators vom elektrischen Netz durchgeführt werden.

Vorzugsweise wird zudem vorgeschlagen, dass das Schließen zum Einschaltzeitpunkt so gesteuert wird, dass
- ein Schließen zu einem Auslösezeitpunkt ausgelöst wird und zu einem Einschaltzeitpunkt wirksam wird, wobei
- der Auslösezeitpunkt um eine Verzögerungszeit vor dem Einschaltzeitpunkt liegt, wobei
- in einem ersten Schritt der Einschaltzeitpunkt festgelegt wird und
- in einem zweiten Schritt der Auslösezeitpunkt in Abhängigkeit des Einschaltzeitpunktes und der Verzögerungszeit festgelegt wird, wobei vorzugsweise das Schalten zu einem Triggerereignis, besonders einer vorbestimmten Phasenlage vor dem Auslösezeitpunkt vorbereitet wird, wobei der Auslösezeitpunkt um eine Vorlaufzeit nach dem Triggerereignis liegt, so dass das Schließen um die Vorlaufzeit nach dem Triggerereignis ausgelöst wird.

Es wurde erkannt, dass für eine erfolgreiche Reduzierung der Einschaltströme des Transformators ein zeitlich genaues Einschalten zum Einschaltzeitpunkt zu einer Phasenlage bzw. zu einem Phasenwinkel der Netzspannung notwendig ist. Um dies realisieren zu können, wird vorgeschlagen, eine Verzögerungszeit der Leistungsschalter bzw. der Leistungsschalteinrichtung zu beachten.

Dazu werden drei Zeitpunkte definiert, nämlich ein Triggerzeitpunkt, ein Auslösezeitpunkt und der Einschaltzeitpunkt. Dabei wird zum Triggerzeitpunkt das Ansteuern der Leistungsschalteinrichtung vorbereitet. Dieser Zeitpunkt ist somit als grundsätzliches Startsignal für den gesamten Schaltvorgang zu verstehen. Der Auslösezeitpunkt ist der Zeitpunkt zu dem die Leistungsschalteinrichtung konkret ausgelöst wird, also der Schalter angesteuert wird. Der Einschaltzeitpunkt beschreibt einen Zeitpunkt zu dem der Schalter elektrisch leitend ist, also geschlossen ist.

Zum Einschaltzeitpunkt wird das Schließen dann wirksam, also eine leitfähige Verbindung hergestellt. Dabei liegt der Einschaltzeitpunkt zu dem eine leitende Verbindung herstellt wird, um eine physikalisch bedingte Verzögerungszeit des Schalters nach dem Auslösezeitpunkt. Der Triggerzeitpunkt wird entsprechend noch früher gelegt. Dabei kann der Triggerzeitpunkt so gelegt werden, dass er um eine variierbare bzw. frei wählbare Vorlaufzeit vor dem Auslösezeitpunkt liegt. Vorzugsweise erfolgt die Wahl eines leicht erkennbaren oder leicht detektierbaren Triggerereignisses, wie ein Phasennulldurchgang.

Bspw. wird vorgeschlagen, die folgenden zwei Schritte ausführen, um den Triggerzeitpunkt festzulegen: In einem ersten Schritt wird der Einschaltzeitpunkt festgelegt zu dem die Leistungsschalteinrichtung die elektrische Verbindung herstellen soll. In einem zweiten Schritt wird der Auslösezeitpunkt dann in Abhängigkeit des Einschaltzeitpunktes und der Verzögerungszeit festgelegt. Dabei wird das Schalten zu einem Triggerereignis vorbereitet, besonders einer vorbestimmten Phasenlage vor dem Auslösezeitpunkt. Dabei liegt der Auslösezeitpunkt um eine Vorlaufzeit nach dem Triggerereignis, so dass das Schließen um die Vorlaufzeit nach dem Triggerereignis ausgelöst wird. Es wird dafür ein geeignetes Triggerereignis vor dem Auslösezeitpunkt ausgewählt. Das Triggerereignis legt den Triggerzeitpunkt fest und dann kann die Vorlaufzeit, also die Zeit vom Triggerzeitpunkt zum Auslösezeitpunkt bestimmt und in der Steuerung berücksichtigt werden. Die Steuerung wartet dann nämlich auf das Triggerereignis, lässt dann die Vorlaufzeit verstreichen und löst dann unmittelbar aus. Der Schalter braucht dann die Verzögerungszeit, um tatsächlich zu schließen und schließt dadurch genau zum Einschaltzeitpunkt.

Dabei kann die vorbestimmte Verzögerungszeit auch mehrere Verzögerungszeiten umfassen. Eine erste Verzögerungszeit ist zum Beispiel die feste physikalisch bedingte Mindestzeit die ein physikalischer Schalter aufweist, nachdem dieser angesteuert bzw. initiiert wurde. Diese Verzögerungszeit ist auch als Ein- bzw. Ausschaltverzögerung bekannt. Damit es zudem möglich ist den Triggerzeitpunkt beliebig festzulegen, können ebenso programmierbare Verzögerungszeiten als Vorlaufzeit implementiert, nämlich ergänzt werden, wie Timer oder Warteschleifen in einem Programmcode.

Somit kann der Triggerzeitpunkt einem leicht erfassbaren Phasenwinkel zugeordnet werden, z.B. dem Phasenwinkel null, also einem Nulldurchgang der Phase. Die gesamte Zeitdauer des Schaltvorgangs bestehend aus der Vorlaufzeit und der Verzögerungszeit des Schalters kann dann als Abstand zwischen dem Triggerzeitpunkt und dem Einschaltzeitpunkt beliebig eingestellt bzw. gewählt werden. Die Verzögerungszeit setzt sich dann also aus einem systembedingten Anteil und einer künstlichen Vorlaufzeit zusammen.

Somit wird insbesondere vorgeschlagen, den Triggerzeitpunkt als Startpunkt so zu legen, dass dieser Triggerzeitpunkt einem Zeitpunkt entspricht, zu dem der Phasenwinkel den Wert 0 aufweist.

Somit ermöglicht das vorgeschlagene Verfahren, dass der Transformator präzise zu dem vorgegebenen Einschaltzeitpunkt mit dem elektrischen Netz verbunden wird und somit zu diesem Zeitpunkt eine elektrisch leitende Verbindung zwischen dem Transformator und dem Netz herstellt.

Somit beachtet das Verfahren auch die Schaltverzögerung der Leistungsschalteinheit, die als systembedingte Verzögerungszeit angesehen werden kann.

Erfindungsgemäß wird vorgeschlagen, dass
- der Transformator in Abhängigkeit seines magnetisierten Zustands eine phasenwinkelabhängige Einschaltstromcharakteristik aufweist, und
- in Abhängigkeit der phasenwinkelabhängigen Einschaltstromcharakteristik der Einschaltwinkel bzw. der Einschaltzeitpunkt bestimmt wird, wobei
- die phasenwinkelabhängige Einschaltstromcharakteristik wenigstens einen Verlauf eines Einschaltstromes einer Phase in Abhängigkeit des Phasenwinkels aufweist, und
- der Verlauf des Einschaltstroms den maximalen Einschaltstrom in Abhängigkeit des Phasenwinkels zum Einschaltzeitpunkt beschreibt, und
- abhängig dieser Einschaltstromcharakteristik der Einschaltwinkel bzw. der Einschaltzeitpunkt ausgewählt wird, insbesondere so, dass
- bei einem dreiphasigen Transformator ein Summeneinschaltstrom als Summe der maximalen Einschaltströme jeder Phase gebildet wird und als Einschaltwinkel bzw. Einschaltzeitpunkt in Bezug auf den Phasenwinkel der Einschaltwinkel bzw. der Einschaltzeitpunkt ausgewählt wird, bei dem der Summeneinschaltstrom ein Minimum annimmt.

Es wird somit eine Einschaltstromcharakteristik des Transformators zu Grunde gelegt, die durch Messungen bestimmt werden kann. Eine solche Messung kann auch einmalig durchgeführt werden und dann für baugleiche Transformatoren übernommen werden. Somit weist der Transformator eine Einschaltstromcharakteristik auf, die die ihn charakterisiert und von seinem magnetischen Zustand abhängt. Sie gibt einen Einschaltstrom in Abhängigkeit eines Einschaltwinkels wieder. Bspw. kann zur Darstellung eine Darstellung in Polarkoordinaten gewählt werden, in der die jeweilige Amplitude des Einschaltstromes in Abhängigkeit des Phasenwinkels in einer umlaufenden Kurve aufgetragen ist. Der Einschaltstrom wird dabei als umlaufender Zeiger mit variierender Länge dargestellt.

Der Einschaltstrom hat ein stark transientes Verhalten und für die Einschaltstromcharakteristik wird davon jeweils der maximale Wert dieses transienten Verlaufs verwendet. Je nach Zuschaltwinkel und Restmagnetisierung ergibt sich nämlich für jede Phase eines dreiphasigen Transformators ein unterschiedlich hoher Einschaltstrom, was sich auch gut in dem jeweiligen Maximalewert widerspiegelt. Werden die drei Verläufe der maximalen Einschaltströme pro Zuschaltwinkel (0-360°) in einem zweidimensionalen Diagramm aufgezeichnet, ergeben sich drei um den Koordinatenursprung umlaufende Kurvenverläufe für den maximalen Einschaltstrom jeder Phase. Jeder der drei Kurvenverläufe weist dabei einen variierenden Abstand zu dem Koordinatenursprung auf. Werden die Abstände der drei Kurvenverläufe zum Koordinatenursprung als Betrag jeweils für jeden Phasenwinkel aufsummiert, ergibt sich ein umlaufender Summeneinschaltstrom. Der Phasenwinkel, bei dem dieser umlaufende Summeneinschaltstrom ein Minimum aufweist, als der Phasenwinkel, bei dem der Abstand zum Koordinatenursprung am kleinsten ist, wird als Einschaltwinkel gewählt, bzw. dazu kann der Einschaltzeitpunkt bestimmt werden. In einem alternativen Verfahren, das nicht ein Teil der Erfindung ist, kann statt des Summenstromes von den drei Phasen nur eine Phase berücksichtigt werden, insbesondere kann die Phase mit dem größten Einschaltstrom verwendet werden. Das Minimum dieses Einschaltstroms kann eine gute Näherung für einen guten Einschaltwinkel für alle drei Phasen bilden.

Zusammengefasst wird erfindungsgemäß also vorgeschlagen, dass anhand der Einstromcharakteristik der beste Einschaltzeitpunkt ausgewählt wird, an dem die Summe der maximalen Einschaltströme der drei Phasen möglichst klein ist. Die Bestimmung des Einschaltzeitpunkts wird demnach anhand der Einschaltstromcharakteristik durchgeführt, oder es wird direkt der Einschaltwinkel bestimmt.

Vorzugsweise wird in Abhängigkeit der phasenwinkelabhängigen Einschaltstromcharakteristik der Einschaltzeitpunkt und/oder der Einschaltwinkel vor der Inbetriebnahme des Transformators bestimmt und als Parameter in einer Steuereinheit hinterlegt.

Es wurde erkannt, dass je nach Verschaltung des Transformators mit der Stromquelle und dessen Spannungsrichtung der geeignete Einschaltzeitpunkt nur einmal anhand der phasenwinkelabhängigen Einschaltstromcharakteristik bestimmt werden muss und anschließend beibehalten werden kann. Der Transformator verhält sich dabei bei gleichen Anfangsbedingungen, die durch eine gleiche Magnetisierung geschaffen werden, auch gleich. Das ist meist auch auf baugleiche Transformatoren mit hinreichender Genauigkeit übertragbar.

Somit ermöglicht das erfindungsgemäße Verfahren, dass ein geeigneter Einschaltwinkel, bzw. Einschaltzeitpunkt nur einmal bestimmt werden muss, wenn die Vormagnetisierung sowie die Verschaltung des Transformators mit der Gleichstromquelle zum Vormagnetisieren bekannt sind und zu Grunde gelegt werden. Demnach muss, wenn der Transformator betrieben wird, lediglich der Triggerzeitpunkt bzw. der Phasenwinkelverlauf der Phasenspannung des elektrischen Netzes messtechnisch bestimmt werden.

Erfindungsgemäß wird weiter vorgeschlagen, dass das Verbinden der Leistungsschalteinrichtung zu einem ausgewählten Einschaltzeitpunkt mit einer drei-phasigen Leistungsschalteinheit durchgeführt wird, die gleichzeitig alle drei Phasen schließt.

Es braucht dann nicht jede Phase einzeln angesteuert zu werden und für jede Phase ein geeigneter Einschaltzeitpunkt bestimmt zu werden, sondern alle Phasen können gleichzeitig durchschalten. Dabei wird auch berücksichtigt, dass die drei Phasen in dem Transformator nicht unabhängig voneinander sind.

Dabei wird zudem vorgeschlagen, dass die Leistungsschalteinheit steuerbar ist und kontrolliert eingeschaltet werden kann. Kontrolliertes Einschalten bedeutet dabei, dass die Verzögerungszeiten des Schalters berücksichtigt werden, um gezielt zu dem gewünschten Einschaltzeitpunkt einschalten zu können. Dabei beschreibt die Verzögerungszeit eine Zeitdauer, die der Leistungsschalter nach einer Ansteuerung bzw. Betätigung benötigt, um eine leitfähige Verbindung herzustellen.

Dabei müssen ggf. abhängig vom Typ des verwendeten Leistungsschalters mehrere Verzögerungszeiten beachtet werden. In den meisten Fällen stellt der Leistungsschalter bereits eine leitfähige Verbindung zwischen dem Transformator und dem elektrischen Netz her, obwohl der Leistungsschalter noch nicht mechanisch geschlossen ist. Dies kann bei einem gasgefüllten Leistungsschalter oder Vakuumleistungsschalter der Fall sein, bei dem über einen Lichtbogen bereits eine leitfähige Verbindung hergestellt wird, ohne dass der Leistungsschalter mechanisch geschlossen ist. Das kann Auswirkungen auf die Verzögerungszeit haben, was hiermit berücksichtigt werden kann. Werden die Verzögerungszeiten der Leistungsschalteinheit bei einem Einschaltvorgang berücksichtigt, wird dies auch als kontrolliertes Einschalten bezeichnet.

In einer weiteren Ausführungsform wird vorgeschlagen, dass das elektrische Netz eine Netzspannung aufweist, die größer als ein 1kV ist, wobei das elektrische Netz dabei vorzugsweise ein elektrisches Versorgungsnetz mit einer Spannung von etwa 110kV sein kann und/oder ein Parknetz eines Windparks oder einer anderen Parknetzanordnung mit einer Spannung von etwa 20kV.

Demnach wird vorgeschlagen, das Verfahren vorzugsweise in Netzen anzuwenden, an denen die dezentralen Energieerzeuger, besonders Windenergieanlagen oder Windparks, direkt angeschlossen werden.

Erfindungsgemäß wird auch eine Kopplungsanordnung vorgeschlagen. Diese ist vorbereitet zum elektrischen Verbinden eines Transformators mit einem eine Netzspannung aufweisenden elektrischen Netz. Der Transformator weist generell mehrere Schenkel und eine Primärseite sowie eine netzseitige Sekundärseite auf. Die Kopplungsanordnung umfasst eine elektrisch an den Transformator angeschlossene Vormagnetisierungsvorrichtung zum Vormagnetisieren des Transformators, bevor das elektrische Verbinden durchgeführt wird, um einen vorbestimmten magnetisierten Zustand des Transformators zu erreichen. Dabei kann die Vormagnetisierungsvorrichtung einen Magnetisierungsstrom erzeugen und an Phaseneingängen des Transformators einleiten, um dadurch einen bekannten magnetischen Zustand im Transformator zu erreichen. Der magnetische Zustand nach dem Vormagnetisieren ist dabei von der Verschaltung der Vormagnetisierungsvorrichtung mit den Phaseneingängen des Transformators abhängig.

Zudem umfasst die Vorrichtung eine zwischen dem Transformator und dem elektrischen Netz angeschlossene Leistungsschalteinrichtung zum elektrischen Verbinden des Transformators mit dem elektrischen Netz. Dabei erfolgt das Verbinden der Leistungsschalteinrichtung über ein Schließen zu einem ausgewählten Einschaltzeitpunkt. Der ausgewählte Einschaltzeitpunkt beschreibt dabei den Zeitpunkt, zu dem eine elektrisch leitende Verbindung in der Leistungsschalteinrichtung hergestellt und somit der Transformator und das elektrische Netz gekoppelt wird.

Die Kopplungsanordnung umfasst weiter eine mit der Leistungsschalteinrichtung gekoppelte Erfassungsvorrichtung zum Erfassen eines Phasenwinkelverlaufs der Netzspannung, der zum Beispiel über die Zeit aufgenommen werden kann. Dabei erfasst die Erfassungsvorrichtung den Phasenwinkelverlauf einer sinusförmigen Netzspannung von wenigstens einer Phase im elektrischen Netz, indem sie bspw. die Netzspannung mit hoher Abtastrate misst und damit ein Spannungssignal aufnimmt und zur Bestimmung der Lage des Phasenwinkels auswertet, indem bspw. ein Nulldurchgang des Spannungssignals bestimmt wird. Unter einer Lage der des Phasenwinkels ist hier besonders die zeitlich absolute Lage des Phasenwinkels des sinusförmigen Spannungssignals zu verstehen.

Die Leistungsschalteinrichtung weist einen Steueranschluss auf, um darüber die Leistungsschalteinrichtung zu einem auswählbaren Einschaltzeitpunkt zu schließen. Somit ist die Leistungsschalteinrichtung dazu eingerichtet, dass diese von einer Steuereinheit angesteuert werden kann. Die Leistungsschalteinrichtung kann dadurch zum Durchführen dieser Schritte, besonders des Schließens der Schalteinrichtung vorbereitet sein, dass sie eine Steuereinrichtung, bspw. einen Prozessrechner aufweist, in dem das Schließen bzw. Schalten zum Einschaltwinkel bzw. Einschaltzeitpunkt als Programmablauf hinterlegt ist. Vorzugsweise wird dort auch die Erfassung des Phasenwinkelverlaufs durchgeführt, ausgewertet oder das Ergebnis der Erfassung dort hinterlegt, um nur ein Beispiel zu nennen. Ansteuern der Leistungsschalteinrichtung kann dabei bedeuten, dass es einen Zeitpunkt gibt, an dem das Verbinden der Leistungsschalteinrichtung initiiert bzw. ausgelöst wird, was auch als getriggert bezeichnet werden kann, wobei der tatsächliche Schaltvorgang etwas später erfolgt.

Das elektrische Verbinden erfolgt zu einem ausgewählten Einschaltzeitpunkt, nachdem die Leistungsschalteinrichtung von der Steuereinheit angesteuert wurde. Dabei beschreibt der Einschaltzeitpunkt den Zeitpunkt, zu dem eine elektrische Verbindung zwischen dem Transformator und dem Netz hergestellt wird. Dabei wird der Einschaltzeitpunkt in Abhängigkeit des vorbestimmten magnetisierten Zustands des Transformators und in Abhängigkeit des erfassten Phasenwinkelverlaufs ausgewählt.

Demnach kann der Steueranschluss der Leistungsschalteinrichtung mit der Steuereinheit so angesteuert werden, dass darüber die Leistungsschalteinrichtung zu einem auswählbaren Einschaltzeitpunkt schließt, um den Transformator in Abhängigkeit des vorbestimmten magnetisierten Zustands des Transformators und des erfassten Phasenwinkelverlaufs mit dem elektrischen Netz zu verbinden.

Erfindungsgemäß ist die Kopplungsanordnung dazu eingerichtet, das erfindungsgemäße Verfahren durchzuführen.

Gemäß einer weiteren Ausführungsform wird vorgeschlagen, dass in der Kopplungsanordnung wenigstens eine Steuereinrichtung vorgesehen ist, zum Steuern der Leistungsschalteinrichtung und/oder zum Steuern der Vormagnetisierungseinrichtung zum Vormagnetisieren des Transformators. Diese Steuereinrichtung ist somit mit der Leistungsschalteinrichtung und/oder der Vormagnetisierungsvorrichtung so gekoppelt, dass sie bspw. Steuerbefehle an die Leistungsschalteinrichtung bzw. der Vormagnetisierungsvorrichtung abgegeben kann und ggf. auch Informationen über deren Zustände empfangen kann. Besonders über eine Zeitsteuerung, die in der Steuereinrichtung hinterlegt sein kann, kann die Dauer der Vormagnetisierung und/oder der Zeitschaltpunkt festgelegt werden. Bspw. kann die Steuereinheit die Leistungsschalteinrichtung und/oder die Gleichstromquelle ansteuern.

Dabei kann die Steuereinheit bspw. über wenigstens eine Steuer- oder Signalleitung die Gleichstromquelle und/oder die Leistungsschalteinrichtung angesteuert bzw. zu gewünschten Einschaltzeitpunkten ein- und ausschalten, in dem die Steuereinheit Steuersignale erzeugt bzw. generiert. Vorzugsweise sind zwei Steuereinrichtungen vorgesehen, nämlich eine für das Steuern des Vormagnetisierens und eine zum Steuern der Leistungsschalteinrichtung.

Vorzugsweise bilden die Steuereinheit und die Erfassungsvorrichtung eine gemeinsame Schalteinheit aus, insbesondere um eine schnelle Erfassung des Phasenwinkelverlaufs der Netzspannung und ein schnelles Zuschalten der Leistungsschalteinrichtung ohne hohe Schaltverzögerung durchführen zu können, insbesondere um Signalwege möglichst kurz zu halten.

Somit wird vorgeschlagen, dass die Steuereinheit und die Erfassungsvorrichtung als eine integrierte Schaltung ausgebildet sein können oder wenigstens räumlich sehr nah zueinander angeordnet sind, beispielsweise in einem Schaltschrank. Die gemeinsame Schalteinheit ist somit eine Vereinigung aus Erfassungs- und Steuermitteln, die beispielsweise auf einer einzigen Platine angeordnet sein können.

Vorzugsweise wird auch vorgeschlagen, dass die Steuereinheit wenigstens eine Schaltverzögerung einer bzw. der Leistungsschalteinheit berücksichtigt, um das Verbinden des Transformators mit dem elektrischen Netz in einem gewünschten Einschaltzeitpunkt zielgenau einschalten zu können, wobei die Schaltverzögerung in einem Parametersatz in der Steuereinheit hinterlegt ist.

Es wurde erkannt, dass die Leistungsschalteinrichtung konstruktive Verzögerungszeiten aufweisen kann. Beispielsweise kann die Leistungsschalteinrichtung zu einem ersten Zeitpunkt durch die Steuereinheit getriggert werden, aber die Herstellung der elektrischen Verbindung mit dem Netz erst zu einem zweiten Zeitpunkt signifikant verzögert erfolgen. Für eine ausreichend gute Reduzierung der Inrush-Ströme ist es von Vorteil, zielgenau zu dem ausgewählten Einschaltzeitpunkt bei einem bestimmten Phasenwinkel einzuschalten. Durch das Berücksichtigen der Schaltverzögerung ist es somit möglich, die Leistungsschalteinrichtung kontrolliert einzuschalten.

In einer weiteren Ausführungsform wird vorgeschlagen, dass die Steuereinheit einen externen Signaleingang aufweist, um externe Steuersignale empfangen zu können.

Somit kann die Steuereinheit ferngesteuert bzw. fernbedient werden, beispielsweise durch einen Netzbetreiber, durch einen Instandhaltungsservice, der eine Fernwartung durchführen kann, oder von einem Windenergieanlagenhersteller.

Zudem wird erfindungsgemäß eine Windenergieanlage mit einer Kopplungsanordnung nach Anspruch 11 vorgeschlagen.

Somit wird vorgeschlagen, den Transformator und die Kopplungsanordnung insbesondere innerhalb einer Windenergieanlage anzuordnen und somit den Einschaltstrom des Transformtors zu reduzieren, der die Windenergieanlage und den Windpark verbindet. Die Kopplungsanordnung wird somit in die Windenergieanlage integriert.

Ferner wird zudem erfindungsgemäß ein Windpark mit mehreren Windenergieanlagen und mit wenigstens einer Kopplungsanordnung nach Anspruch 12 vorgeschlagen. Demnach wird vorgeschlagen, den Transformator und die Kopplungsanordnung insbesondere innerhalb eines Windparks anzuordnen und somit den Einschaltstrom des Transformtors zu reduzieren, der das Windparknetz und das elektrische Versorgungsnetz verbindet. Somit wird vorgeschlagen, die Kopplungsanordnung in den Windpark zu integrieren.

Das Verfahren zum elektrischen Verbinden eines Transformators und/oder die Kopplungsanordnung kann auch zum Verbinden eines Transformators innerhalb eines elektrischen Versorgungsnetzes mit einem Netzabschnitt eingesetzt werden, um bspw. zwei Netzabschnitte miteinander zu koppeln.

Die vorliegende Erfindung wird nun nachfolgend exemplarisch anhand von Ausführungsbeispielen unter Bezugnahme auf die begleitenden Figuren näher erläutert.
- Figur 1: zeigt eine perspektivische Ansicht einer Windenergieanlage.
- Figur 2: zeigt eine schematische Darstellung eines Windparks.
- Figur 3: zeigt eine schematische Darstellung einer Kopplungsanordnung mit einer Windenergieanlage und einem elektrischen Versorgungsnetz.
- Figur 4A: zeigt eine Verschaltungsvariante der Ladevorrichtung mit einer Primärseite eines Transformators.
- Figur 4B: zeigt zu der Verschaltungsvariante der Figur 4A eine Tabelle mehrerer Verschaltungsvarianten, von denen die der Figur 4A eine ist.
- Figur 4C: zeigt einen schematischen Ablauf eines kontrollierten Schaltvorganges zum zeitgenauen Einschalten im Einschaltzeitpunkt.
- Figur 4D: zeigt eine schematische Darstellung einer phasenwinkelabhängigen Einschaltstromcharakteristik zum Bestimmen eines Einschaltwinkels, um den ausgewählten Einschaltzeitpunkt festzulegen.
- Figur 5: zeigt ein schematisches Ablaufdiagramm mit Verfahrensschritten.

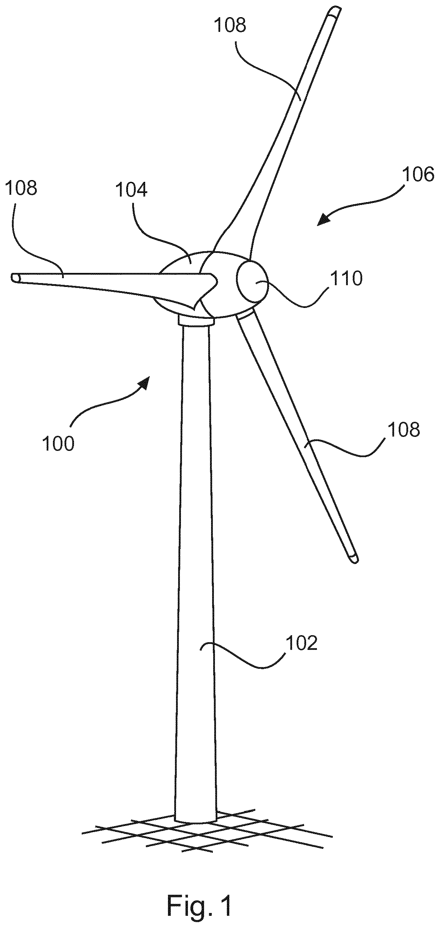

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

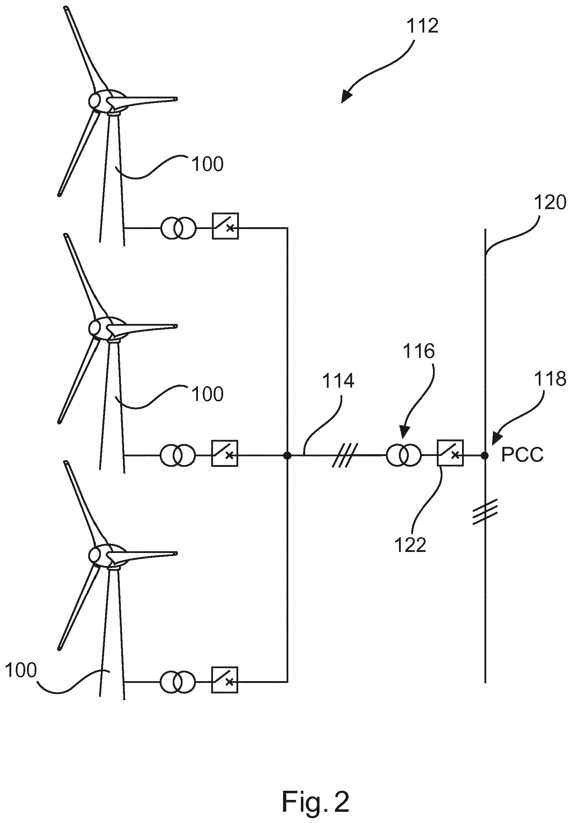

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

Zu jedem Transformator 116 ist zudem eine Leistungsschalteinrichtung 122 in Serie geschaltet, sodass jeder Transformator mit der Leistungsschalteinrichtung vom elektrischen Netz 114 oder 120 getrennt bzw. verbunden werden kann.

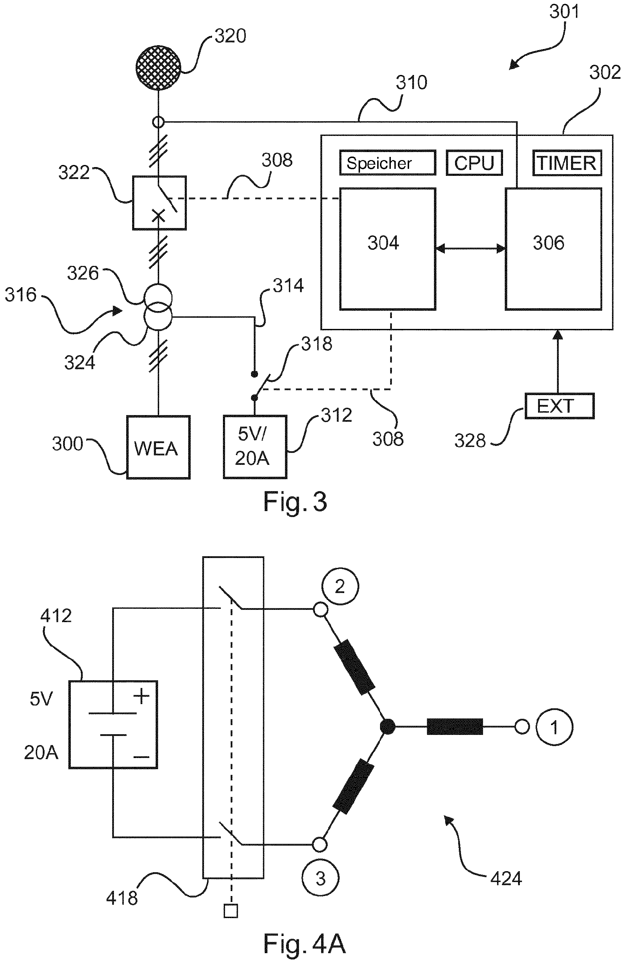

Figur 3 zeigt eine schematische Darstellung einer Kopplungsanordnung 301. Demnach ist eine Windenergieanlage 300 mit einem dreiphasigen Transformator 316 an einer Primärseite 324 elektrisch verbunden. Zudem ist eine Sekundärseite 326 des Transformators 316 über eine Leistungsschalteinrichtung 322 mit einem elektrischen Versorgungsnetz 320 verbunden. Die Leistungsschalteinrichtung 322 ist somit ebenfalls dreiphasig ausgeführt und dazu eingerichtet, für alle drei Phasen zwischen dem elektrischen Versorgungsnetz und der Sekundärseite des Transformators gleichzeitig schließen und öffnen zu können.

Im in der Figur 3 gezeigten Ausführungsbeispiel ist eine Ladevorrichtung 312, die ein Beispiel für eine Vormagnetisierungsvorrichtung ist bzw. Teil einer Vormagnetisierungsvorrichtung sein kann, über einen Ladeschalter 318 und eine Ladeleitung 314 mit einer Primärseite 324 des Transformators verbunden. Dabei kann der Ladeschalter 318 auch ein Teil der Ladevorrichtung 312 sein. Die Ladevorrichtung ist somit dazu vorbereitet, einen Magnetisierungsstrom an den Transformator bereitzustellen, um einen vorbestimmten magnetisierten Zustand des Transformators zu erreichen. Die Ladevorrichtung kann als eine Gleichstromquelle ausgeführt sein, die einen Gleichstrom als Magnetisierungsstrom von 20A bei einer Spannung von 5V bereitstellen kann. Die Ladevorrichtung 314 braucht dabei nicht unbedingt an die Primärseite des Transformators angeschlossen zu werden. Ein Anschließen an die Sekundärseite ist ebenfalls möglich.

Um das Vormagnetisieren des Transformators zu steuern, bevor das elektrische Verbinden durchgeführt wird, ist eine Steuereinheit 304 vorgesehen, die einen Ladeschalter 318 über eine Steuerleitung 308 steuern kann. Im gezeigten Ausführungsbeispiel startet und stoppt die Steuereinheit 304 das Vormagnetisieren des Transformators mit der Gleichstromquelle, indem der Ladeschalter 318 angesteuert wird. Die Vormagnetisierung ist dann abgeschlossen, wenn der Transformator über eine ausreichend lange Zeit mit dem Magnetisierungsstrom bestromt wurde. Als ausreichend lange Zeit zum Vormagnetisieren werden 2 Sekunden, vorzugsweise 10 Sekunden, insbesondere 15 Sekunden vorgeschlagen. Wird der Transformator über diese Zeit aufgestromt, befindet er sich, je nach Verschaltung der Gleichstromquelle, in einem hinreichend bekannten und damit vorbestimmten magnetisierten Zustand.

Neben der Steuereinheit 304 ist in der Figur 3 auch eine Erfassungsvorrichtung 306 dargestellt. Hierbei ist die Erfassungsvorrichtung 306 zum Erfassen eines Phasenwinkelverlaufs der Netzspannung vorbereitet. Dazu kann die Erfassungsvorrichtung mit einem geeigneten Messmittel die Amplitude und Netzfrequenz einer Phase im elektrischen Versorgungsnetz 320 über die Messleitung 310 erfassen. Demnach wird der Wechselspannungsverlauf der Netzspannung U_{L} durch die Erfassungsvorrichtung ermittelt. Zudem ermöglicht die Erfassung, dass signifikante Messpunkte wie die Nulldurchgänge der Netzspannung U_{L} zur Festlegung eines Einschaltzeitpunkts der Leistungsschalteinrichtung genutzt werden können,

Die Steuereinheit 304 und die Erfassungsvorrichtung 306 können dabei auch eine gemeinsame Schalteinheit 302 ausbilden, also beispielsweise als eine integrierte Schaltung ausgeführt sein. Der gezeigte Pfeil zwischen der Steuereinheit und der Erfassungsvorrichtung veranschaulicht, dass die beiden Komponenten 304 und 306 in Beziehung stehen bzw. miteinander kommunizieren. Dabei kann beispielsweise die Erfassung des Phasenwinkelverlaufs von der Steuereinheit 304 ausgelöst werden, sowie der daraufhin erfasste Phasenwinkelverlauf als an die Steuereinheit 304 in Form von Messdaten zur Verfügung gestellt wird.

Ebenfalls ist innerhalb der Schalteinheit 302 jeweils ein CPU-Block 305, ein MEMORY-Block 303 und ein TIMER-Block 307 dargestellt. Der CPU-Block 305 beschreibt ganz generell, dass sowohl die Steuereinheit als auch die Erfassungsvorrichtung auch mit einer Verarbeitungseinheit ausgestattet sein können. Diese kann beispielsweise dazu verwendet werden, aus dem bekannten vormagnetisierten Zustand und den erfassten Messdaten einen geeigneten Einschaltzeitpunkt zum Einschalten der Leistungsschalteinrichtung zu berechnen. Der MEMORY-Block 303 veranschaulicht dabei einen Datenspeicher, auf dem zum Beispiel Parametersätze gespeichert werden können. Dort können Verzögerungszeiten je nach Typ der Leistungsschalteinrichtung hinterlegt werden, um ein kontrolliertes Einschalten zu ermöglichen. Der TIMER-Block 307 veranschaulicht, dass die Schalteinheit 302 bzw. die Steuereinheit 304 dazu vorbereitet sind, einen Timer verwenden zu können. Diese können genutzt werden, um ein Einschalten der Leistungsschalteinrichtung 322 zu einem ausgewählten Einschaltzeitpunkt zu steuern und damit zu realisieren.

Ist das Vormagnetisieren des Transformators abgeschlossen und eine Netzspannung U_{L} erfasst worden, kann die Steuereinheit 304 die Leistungsschalteinrichtung 322 über die Steuerleitung 318 ansteuern. Dafür bestimmt die Steuereinheit 304 einen ausgewählten Einschaltzeitpunkt, zu dem die Leistungsschalteinrichtung 322 eine elektrische Verbindung zwischen der Sekundärseite 326 des Transformators 316 und dem elektrischen Netz 320 herstellen soll. Dieser Einschaltzeitpunkt wird dabei in Abhängigkeit des vorbestimmten magnetisierten Zustands des Transformators 316 und des erfassten Phasenwinkelverlaufs von der Steuereinheit 304 ausgewählt. Dabei kann die Steuereinheit 304 im Speicher, besonders im Memory-Block 303 hinterlegte Parametersätze berücksichtigen, die beispielsweise die Verzögerungszeit der Leistungsschalteinrichtung 322 umfassen können.

Zudem umfasst die Steuereinheit 304 insbesondere auch interne Timer. Dabei wird der einstellbare Timer insbesondere dazu verwendet, die Leistungsschalteinrichtung 322 zu dem ausgewählten Einschaltzeitpunkt einzuschalten. Soll beispielsweise eine elektrische Verbindung zu einem Schaltzeitpunkt tₒₙ bei 15ms nach einem erfassten Nulldurchgang erfolgen, wobei die Leistungsschalteinrichtung eine feste Schaltverzögerung t_{delay} von 10ms aufweist, kann der Timer auf einen Wert von 5ms eingestellt werden. Somit erfolgt das Verbinden des Transformators 316 mit dem elektrischen Netz 320 über die Leistungsschalteinrichtung zeitlich genau zu dem ausgewählten Einschaltzeitpunkt.

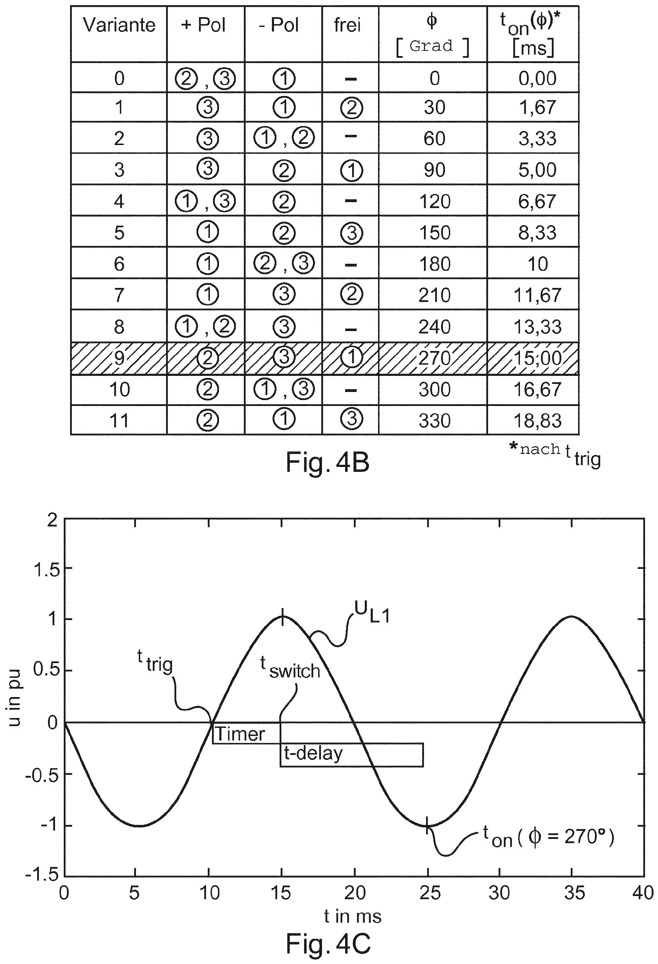

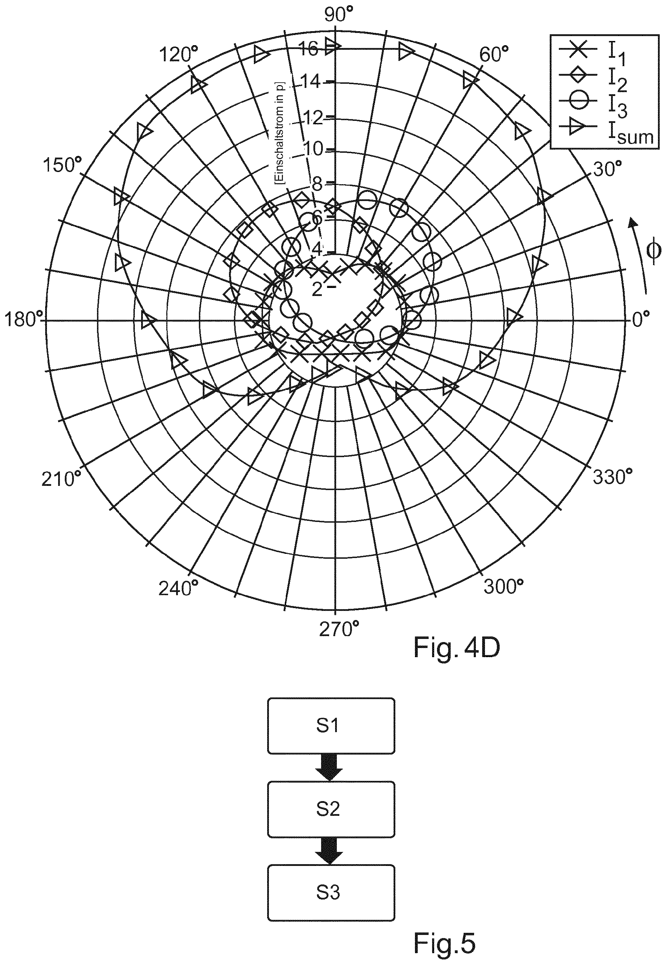

Die Figuren 4A, 4B, 4C und 4D sind aufeinander bezogen und werden in einer Gesamtbetrachtung im Folgenden erläutert:
Figur 4A zeigt eine Verschaltungsmöglichkeit der Ladevorrichtung 412 mit einer Primärseite eines Transformators 424. Dabei ist die Ladevorrichtung über den Ladeschalter 418 mit den drei Phaseneingängen 1, 2 bzw. 3 gekoppelt. Je nach Verschaltung der Ladevorrichtung 412 mit den drei Phaseneingängen 1, 2 bzw. 3 stellt sich ein unterschiedlicher magnetischer bzw. magnetisierter Zustand im Transformator 424 ein, weil die Schenkel des Transformators unterschiedlich vom Magnetisierungsstrom durchflossen werden.

Diese unterschiedlichen Verschaltungsvarianten sind in der Tabelle in der Fig. 4B dargestellt. Die in der Figur 4A gezeigte Verschaltungsvariante entspricht dabei der grau hinterlegten Variante 9 der Tabelle der Figur 4B. Dabei wird zum Vormagnetisieren eine erste Gleichspannung zwischen einem zweiten und dritten Phaseneingang 2, 3 angelegt und an einem ersten Phaseneingang 1 wird keine Spannung angelegt.

Bei der Variante 4 werden der dritte und zweite und erste Phaseneingang 3,1 miteinander verbunden, sodass diese einen gemeinsamen Knoten bilden, und es wird die Gleichspannung zwischen dem zweiten Phaseneingang 2) und diesem Knoten angelegt.

Jede der insgesamt 12 Varianten führt zu einem anderen magnetischen bzw. magnetisierten Zustand und resultiert somit jeweils in einen anderen Einschaltzeitpunkt. In der Tabelle ist in der fünften Spalte der Zuschaltwinkel φ eingezeichnet. Dieser Zuschaltwinkel und ein zugehöriger Einschaltzeitpunkt tₒₙ sind in der Figur 4C veranschaulicht.

Dabei zeigt die Figur 4C einen zeitlichen Ablauf eines kontrollierten Schaltvorganges zum zeitgenauen Einschalten im ausgewählten Einschaltzeitpunkt. Wird demnach die Primärseite des Transformators mit der Ladevorrichtung 412 in der Verschaltungsvarianten 9 magnetisiert, beträgt der ausgewählte Einschaltzeitpunkt tₒₙ 15ms nach einem positiven Nulldurchgang. Von diesem Nulldurchgang aus erreicht der Phasenwinkel nach dem Zeitraum von 15ms den Wert 270°. Im Nulldurchgang liegt dabei ein Triggerzeitpunkt t_{trig}, zu dem der gesamte Schaltvorgang in Lauf gesetzt wird.

Nachdem der Transformator in der Schaltvariante 9 vormagnetisiert wurde und eine Netzspannung U_{L} erfasst wurde, steuert die Steuereinheit die Leistungsschalteinrichtung derart an, dass zum Einschaltzeitpunkt tₒₙ(φ= 270°) eine elektrisch leitende Verbindung zwischen dem Transformator und dem Netz tatsächlich hergestellt wird. Dazu wird als Triggerereignis eine Phasenlage von 0° verwendet. Der Triggerzeitpunkt t_{trig} liegt somit bei dem Phasenwinkel von 0° einer Phase der Netzspannung.

In der Figur 4C liegt dieser Triggerzeitpunkt t_{trig} also in dem positiven Nulldurchgang bei t=10ms. Zu diesem Zeitpunkt wird das Ansteuern der Leistungsschalteinrichtung vorbereitet. Das ist somit das grundsätzliche Startsignal für den gesamten Schaltvorgang. Der Schalter wird aber zum Triggerzeitpunkt noch nicht angesteuert, sondern es wird für die Dauer der berechneten Vorlaufzeit, die auch als Timer-Zeit bezeichnet werden kann und die hier 5ms beträgt, zunächst gewartet, nämlich für die Dauer der Vorlaufzeit. Dann, also um die Vorlaufzeit, nämlich 5ms später, nämlich zur Auslösezeit t_{switch}, die hier bei t=15ms liegt, wird der Schalter angesteuert und dadurch ausgelöst. Dieser benötigt eine Verzögerungszeit von 10ms bis er tatsächlich geschlossen ist, so dass weitere 10ms später, nämlich nach Ablauf der Verzögerungszeit, die auch als Delay-Zeit bezeichnet werden kann, der Schalter bei t=25ms und damit genau bei 270°, geschlossen ist.

Die Delay-Zeit von 10ms ist durch die Architektur des Schalters vorgegeben und ist die feste Schaltverzögerung der Leistungsschalteinrichtung. Sie beträgt hier t_{delay}= 10ms.. Der Abstand vom Triggerzeitpunkt bis zum gewünschten Einschaltzeitpunkt beträgt aber 15ms, so dass die Timer-Zeit zu 5ms berechnet wird. Damit gemäß der Variante 9 der Fig. 4B zu dem Einschaltzeitpunkt tₒₙ^{*}= 15ms (vgl. Tabelle in Fig. 4B) nach dem Triggerzeitpunkt t_{trig} gekoppelt wird, ist die Zeitdauer des Timers somit auf 5ms festgelegt worden.

Demnach erfolgt ein kontrolliertes Einschalten des Transformators zu dem gewünschten Einschaltzeitpunkt bei t_{οn}(φ=270°) = 25ms. Zu diesem Einschaltzeitpunkt erfolgt somit das Verbinden des Transformators mit dem Netz mittels der dreiphasigen Leistungsschalteinheit für alle drei Phasen gleichzeitig, sodass eine leitfähige Verbindung zeitgenau zum Einschaltzeitpunkt erfolgt.

Figur 4D zeigt eine schematische Darstellung einer phasenwinkelabhängigen Einschaltstromcharakteristik zum Bestimmen eines Einschaltwinkels, um den ausgewählten Einschaltzeitpunkt festzulegen. Um die Einschaltstromcharakteristik aufzunehmen, ist der Transformator im gezeigten Beispiel in der Schaltvariante 9 aus der Tabelle der Figur 4B verschaltet. Dabei werden die maximalen Einschaltströme I₁, I₂ und I₃ aller drei Phasen des Transformators in 15°-Schritten von 0° bis 360° aufgezeichnet, die beim Verbinden bzw. Zuschalten des Transformators entstehen. Dazu wird die Einschaltstromcharakteristik erfasst, indem der Transformator in der Schaltvariante 9 verschaltet wird und dann 24-mal vormagnetisiert und die Leistungsschalteinrichtung kontrolliert in 15°-Schritten angesteuert bzw. eingeschaltet wird. Die so bestimmten Messwerte der maximalen Einschaltströme pro Phase werden in dem Kreisdiagramm eingezeichnet, nämlich als Abstand zum Koordinatenursprung. Dabei beschreibt der Abstand eines Messwertes zum Koordinatenursprung ein normiertes Vielfaches des dabei jeweils maximal aufgetretenen Einschaltstromes (î in pu) bezogen auf einen Nennstrom des Transformators.

Wie an dem Verlauf der maximalen Einschaltströme zu erkennen ist, liegt eine Abhängigkeit vom jeweiligen Phasenwinkels vor, dem ein Einschaltzeitpunkt zugeordnet werden kann. Der am besten geeignetste Phasenwinkel zum Einschalten ist in der gezeigten Magnetisierungsvariante 9 der Wert von 270°, denn bei 270° ergibt sich für alle drei Phasen der geringste Einschaltstrom. An diesem Punkt weist auch der Summeneinschaltstrom Iₛᵤₘ der drei Einschaltströme ein Minimum auf. Demnach wurde der Einschaltwinkel bzw. der Einschaltzeitpunkt so ausgewählt, dass bei einem dreiphasigen Transformator ein Summeneinschaltstrom als Summe der drei maximalen Einschaltströme I₁, I₂ und I₃ jeder Phase gebildet wurde und als Einschaltwinkel der Phasenwinkel ausgewählt wird, bei dem der Summeneinschaltstrom Iₛᵤₘ = I₁+I₂+I₃ ein Minimum annimmt. Dieser so bestimmte Phasenwinkel entspricht gemäß der Tabelle in 4B einem Einschaltzeitpunkt von 15ms nach dem Nulldurchgang.

Figur 5 zeigt ein schematisches Ablaufdiagramm mit drei Verfahrensschritten. Der erste Verfahrensschritt S1 ist: Vormagnetisieren des Transformators, bevor das elektrische Verbinden durchgeführt wird, um einen vorbestimmten magnetisierten Zustand des Transformators zu erreichen. Dabei kann das Vormagnetisieren des Transformators mittels eines Magnetisierungsstroms durchgeführt und der Magnetisierungsstrom von einer Gleichstromquelle bereitgestellt werden. Das Vormagnetisieren umfasst dabei auch die Schritte Einschalten der Gleichstromquelle, Bestromen des Transformators für eine vorgegebene Zeitdauer sowie anschließend, Abschalten der Gleichstromquelle.

Der zweite Verfahrensschritt S2 ist: Erfassen eines Phasenwinkelverlaufs der Netzspannung.

Der dritte Schritt S3 ist: Verbinden des Transformators mit dem elektrischen Netz durch Schließen der Leistungsschalteinrichtung, wobei das Schließen in Abhängigkeit des vorbestimmten magnetisierten Zustands des Transformators und in Abhängigkeit des erfassten Phasenwinkelverlaufs erfolgt.

## Patentansprüche

1. Verfahren zum elektrischen Verbinden eines Transformators (316) mit einem eine Netzspannung aufweisenden elektrischen Netz (320) über eine Leistungsschalteinrichtung (322), wobei
- der Transformator eine Primärseite (324) und eine netzseitige Sekundärseite (326) aufweist, umfassend die Schritte:
- Vormagnetisieren des Transformators bevor das elektrische Verbinden durchgeführt wird, um einen vorbestimmten magnetisierten Zustand des Transformators zu erreichen;
- Erfassen eines Phasenwinkelverlaufs der Netzspannung;
- Verbinden des Transformators mit dem elektrischen Netz durch Schließen der Leistungsschalteinrichtung, wobei
- das Schließen in Abhängigkeit des vorbestimmten magnetisierten Zustands des Transformators und
- in Abhängigkeit des erfassten Phasenwinkelverlaufs erfolgt, wobei
- das Schließen zu einem ausgewählten Einschaltwinkel erfolgt und
- der Einschaltwinkel in Abhängigkeit des vorbestimmten magnetisierten Zustands des Transformators (316) ausgewählt wird und/oder dass
- das Schließen zu einem ausgewählten Einschaltzeitpunkt erfolgt und der Einschaltzeitpunkt
- in Abhängigkeit des vorbestimmten magnetisierten Zustands des Transformators und
- in Abhängigkeit des erfassten Phasenwinkelverlaufs ausgewählt wird, insbesondere, dass der Einschaltzeitpunkt aus dem Einschaltwinkel bestimmt wird, wobei
- ein dreiphasiger Transformator (316) verwendet wird, und
- der Transformator einen ersten, zweiten und dritten Phaseneingang zum Anlegen jeweils einer Phase aufweist, und
- zum Vormagnetisieren eine erste Gleichspannung zwischen dem ersten und zweiten Phaseneingang angelegt wird, und an den dritten Phaseneingang keine Spannung angelegt wird, oder
- der zweite und der dritte Phaseneingang miteinander verbunden werden, so dass sie einen gemeinsamen Knoten bilden und die Gleichspannung zwischen dem ersten Phaseneingang und diesem Knoten angelegt wird, und
- der Transformator (316) in Abhängigkeit seines magnetisierten Zustands eine phasenwinkelabhängige Einschaltstromcharakteristik aufweist, und
- in Abhängigkeit der phasenwinkelabhängigen Einschaltstromcharakteristik der Einschaltwinkel (φ) bzw. der Einschaltzeitpunkt (tₒₙ) bestimmt wird, wobei
- die phasenwinkelabhängige Einschaltstromcharakteristik wenigstens einen Verlauf eines Einschaltstroms einer Phase in Abhängigkeit des Phasenwinkels aufweist, und
- der Verlauf des Einschaltstroms den maximalen Einschaltstrom (I₁, I₂, I₃) in Abhängigkeit des Phasenwinkels zum Einschaltzeitpunkt beschreibt, und
- abhängig dieser Einschaltstromcharakteristik der Einschaltwinkel bzw. der Einschaltzeitpunkt ausgewählt wird, nämlich so, dass
- ein Summeneinschaltstrom (Iₛᵤₘ) als Summe der maximalen Einschaltströme jeder Phase gebildet wird und als Einschaltwinkel bzw. Einschaltzeitpunkt in Bezug auf den Phasenwinkel der Einschaltwinkel bzw. der Einschaltzeitpunkt ausgewählt wird, bei dem der Summeneinschaltstrom ein Minimum annimmt, und
- das Verbinden der Leistungsschalteinrichtung (322) zu einem ausgewählten Einschaltzeitpunkt (tₒₙ) bzw. Einschaltwinkel mittels einer dreiphasigen Leistungsschalteinheit auf allen drei Phasen gleichzeitig durchgeführt wird,
- wobei die Leistungsschalteinheit kontrolliert eingeschaltet wird.

2. Verfahren nach Anspruch 1,
**dadurch gekennzeichnet, dass**
- das Vormagnetisieren des Transformators (316) vor dem elektrischen Verbinden des Transformators mit dem elektrischen Netz wenigstens für eine vorbestimmte Zeitdauer, insbesondere von 0,5 Sekunden, vorzugsweise 2 Sekunden, insbesondere 10 Sekunden durchgeführt wird, um die vorbestimmte Magnetisierung des Transformators zu erreichen, und/oder, dass
- die Einschaltdauer so gewählt wird, dass wenigstens 50% der vorbestimmten Magnetisierung erreicht werden.

3. Verfahren nach Anspruch 1 oder 2,
**dadurch gekennzeichnet, dass**
das Schließen zum Einschaltzeitpunkt (tₒₙ) so gesteuert wird, dass
- ein Schließen zu einem Auslösezeitpunkt (t_{switch}) ausgelöst wird und zu einem Einschaltzeitpunkt wirksam wird, wobei
- der Auslösezeitpunkt um eine Verzögerungszeit vor dem Einschaltzeitpunkt liegt, wobei
- in einem ersten Schritt der Einschaltzeitpunkt festgelegt wird und
- in einem zweiten Schritt der Auslösezeitpunkt in Abhängigkeit des Einschaltzeitpunktes und der Verzögerungszeit festgelegt wird, wobei vorzugsweise das Schalten zu einem Triggerereignis, besonders einer vorbestimmten Phasenlage vor dem Auslösezeitpunkt vorbereitet wird, wobei der Auslösezeitpunkt um eine Vorlaufzeit nach dem Triggerereignis liegt, so dass das Schließen um die Vorlaufzeit nach dem Triggerereignis ausgelöst wird.

4. Verfahren nach einem der vorstehenden Ansprüche,
**dadurch gekennzeichnet, dass**
- in Abhängigkeit der phasenwinkelabhängigen Einschaltstromcharakteristik der Einschaltzeitpunkt und/oder der Einschaltwinkel vor der Inbetriebnahme des Transformators (316) bestimmt, und
- als Parameter in einer Steuereinheit (304) hinterlegt wird.

5. Verfahren nach einem der vorstehenden Ansprüche,
**dadurch gekennzeichnet, dass**
- das elektrische Netz eine Netzspannung von mehr als 1kV aufweist, wobei
- das elektrische Netz vorzugsweise
- ein elektrisches Versorgungsnetz (120) ist mit einer Spannung von etwa 110kV oder
- ein Parknetz (114) eines Windparks ist mit einer Spannung von etwa 20kV ist.

6. Kopplungsanordnung (301) zum elektrischen Verbinden eines Transformators (316) mit einem eine Netzspannung aufweisenden elektrischen Netz (320), umfassend:
- eine elektrisch an den Transformator angeschlossene Vormagnetisierungsvorrichtung (312) zum Vormagnetisieren des Transformators bevor das elektrische Verbinden durchgeführt wird, um einen vorbestimmten magnetisierten Zustand des Transformators zu erreichen;
- eine zwischen dem Transformator und dem elektrischen Netz angeschlossene Leistungsschalteinrichtung (322) zum elektrischen Verbinden des Transformators mit dem elektrischen Netz,
- eine mit der Leistungsschalteinrichtung gekoppelte Erfassungsvorrichtung (306) zum Erfassen eines Phasenwinkelverlaufs der Netzspannung, wobei
- die Leistungsschalteinrichtung einen Steueranschluss aufweist, um darüber die Leistungsschalteinrichtung zu einem auswählbaren Einschaltzeitpunkt zu schließen, um den Transformator
- in Abhängigkeit des vorbestimmten magnetisierten Zustands des Transformators und
- in Abhängigkeit des erfassten Phasenwinkelverlaufs mit dem elektrischen Netz zu verbinden, wobei
- die Kopplungsanordnung (301) dazu eingerichtet ist, ein Verfahren nach einem der vorstehenden Ansprüche durchzuführen.

7. Kopplungsanordnung (301) nach Anspruch 6, **dadurch gekennzeichnet, dass**
- wenigstens eine Steuereinrichtung (304) vorgesehen ist, zum Steuern der Leistungsschalteinrichtung (322) und/oder zum Steuern der Vormagnetisierungseinrichtung (312) zum Vormagnetisieren des Transformators.

8. Kopplungsanordnung nach Anspruch 6 oder 7,
**dadurch gekennzeichnet, dass**
- die Steuereinheit (304) und die Erfassungsvorrichtung (306)
- eine gemeinsame Schalteinheit (302) ausbilden, insbesondere um eine schnelle Erfassung des Phasenwinkelverlaufs der Netzspannung und ein schnelles Zuschalten der Leistungsschalteinrichtung ohne hohe Schaltverzögerung durchführen zu können, insbesondere um Signalwege möglichst kurz zu halten.

9. Kopplungsanordnung nach einem der Ansprüche 6 bis 8,
**dadurch gekennzeichnet, dass**
- die Steuereinheit (304) wenigstens eine Schaltverzögerung (t_{delay}) einer bzw. der Leistungsschalteinheit (322) berücksichtigt, um das Verbinden des Transformators (316) mit dem elektrischen Netz (320) in einem gewünschten Einschaltzeitpunkt (tₒₙ) zeitgenau einschalten zu können, wobei
- die Schaltverzögerung in einem Parametersatz in der Steuereinheit hinterlegt ist.

10. Kopplungsanordnung nach einem der Ansprüche 6 bis 9,
**dadurch gekennzeichnet, dass**
die Steuereinheit (304) einen externen Signaleingang (328) aufweist, um externe Steuersignale empfangen zu können.

11. Windenergieanlage (100) mit einer Kopplungsanordnung (301) nach einem der Ansprüche 6 bis 10 und/oder dazu vorbereitet, ein Verfahren nach einem der Ansprüche 1 bis 5 auszuführen.

12. Windpark (312) mit mehreren Windenergieanlagen (100) und mit wenigstens einer Kopplungsanordnung (301) nach einem der Ansprüche 6 bis 10 und/oder dazu vorbereitet, ein Verfahren nach einem der Ansprüche 1 bis 5 auszuführen.

## Claims

1. Method for electrically connecting a transformer (316) to an electrical network (320) which has a network voltage by means of a power switching device (322), wherein
- the transformer has a primary side (324) and a network-side secondary side (326), comprising the steps of:
- premagnetising the transformer before the electrical connection is carried out in order to achieve a predetermined magnetised state of the transformer;
- detecting a phase angle path of the network voltage;
- connecting the transformer to the electrical network by closing the power switching device, wherein
- the closure is carried out in accordance with the predetermined magnetised state of the transformer, and
- in accordance with the detected phase angle path, wherein
- the closure is carried out at a selected switching-on angle and
- the switching-on angle is selected in accordance with the predetermined magnetised state of the transformer (316) and/or in that
- the closure is carried out at a selected switching-on time and the switching-on time
- is selected in accordance with the predetermined magnetised state of the transformer and
- in accordance with the detected phase angle path, in particular in that the switching-on time is determined from the switching-on angle, wherein
- a three-phase transformer (316) is used, and
- the transformer has a first, second and third phase input for applying a phase in each case, and,
- for premagnetisation, a first DC voltage is applied between the first and the second phase input and no voltage is applied at the third phase input, or
- the second and the third phase input are connected to each other so that they form a common node and the direct-current voltage is applied between the first phase input and this node, and
- the transformer (316) has in accordance with the magnetised state thereof a phase-angle-dependent switching-on current characteristic, and
- the switching-on angle (Φ) or the switching-on time (tₒₙ) is determined in accordance with the phase-angle-dependent switching-on current characteristic, wherein
- the phase-angle-dependent switching-on current characteristic has at least one path of a starting current of a phase in accordance with the phase angle, and
- the path of the starting current describes the maximum starting current (I₁, I₂, I₃) in accordance with the phase angle at the switching-on time, and,
- depending on this switching-on current characteristic, the switching-on angle or the switching-on time is selected in such a manner that
- a total starting current (Iₛᵤₘ) is formed as the sum of the maximum starting currents of each phase and as a switching-on angle or switching-on time with respect to the phase angle the switching-on angle or the switching-on time at which the total starting current assumes a minimum is selected, and
- the connection of the power switching device (322) is carried out at a selected switching-on time (tₒₙ) or switching-on angle by means of a three-phase power switching unit on all three phases at the same time,
- wherein the power switching unit is switched on in a controlled manner.

2. Method according to claim 1,
**characterised in that**
- the premagnetisation of the transformer (316) is carried out prior to the electrical connection of the transformer to the electrical network at least for a predetermined period of time, in particular of 0.5 seconds, preferably 2 seconds, in particular 10 seconds, in order to achieve the predetermined magnetisation of the transformer, and/or **in that**
- the operating time is selected in such a manner that at least 50% of the predetermined magnetisation is achieved.

3. Method according to claim 1 or claim 2,
**characterised in that**
the closure at the switching-on time (tₒₙ) is controlled in such a manner that
- a closure is triggered at a trigger time (t_{switch}) and becomes effective at a switching-on time, wherein
- the trigger time is before the switching-on time by a delay time, wherein
- the switching-on time is determined in a first step, and
- the trigger time is determined in a second step in accordance with the switching-on time and the delay time, wherein the switching to a trigger event, in particular a predetermined phase position, is preferably prepared prior to the trigger time, wherein the trigger time is after the trigger event by a lead time so that the closure is triggered after the trigger event by the lead time.

4. Method according to any one of the preceding claims,
**characterised in that**
- the switching-on time and/or the switching-on angle is/are determined in accordance with the phase-angle-dependent switching-on current characteristic prior to starting up the transformer (316), and
- is stored as a parameter in a control unit (304).

5. Method according to any one of the preceding claims,
**characterised in that**
- the electrical network has a network voltage of more than 1 kV, wherein
- the electrical network is preferably
- an electrical supply network (120) having a voltage of approximately 110 kV, or
- a farm network (114) of a wind farm having a voltage of approximately 20 kV.

6. Coupling arrangement (301) for electrically connecting a transformer (316) to an electrical network (320) having a network voltage, comprising:
- a premagnetisation device (312) which is electrically connected to the transformer for premagnetising the transformer before the electrical connection is carried out in order to achieve a predetermined magnetised state of the transformer;
- a power switching device (322) which is connected between the transformer and the electrical network for electrically connecting the transformer to the electrical network,
- a detection device (306) which is coupled to the power switching device for detecting a phase angle path of the network voltage, wherein
- the power switching device has a control connection in order to thereby close the power switching device at a selectable switching-on time in order to connect the transformer to the electrical network
- in accordance with the predetermined magnetised state of the transformer and
- in accordance with the detected phase angle path, wherein
- the coupling arrangement (301) is configured to carry out a method according to any one of the preceding claims.

7. Coupling arrangement (301) according to claim 6,
**characterised in that**
- at least one control device (304) is provided in order to control the power switching device (322) and/or to control the premagnetisation device (312) in order to premagnetise the transformer.

8. Coupling arrangement according to claim 6 or 7,
**characterised in that**
- the control unit (304) and the detection device (306)
- form a common switching unit (302), in particular in order to be able to carry out a rapid detection of the phase angle path of the network voltage and a rapid switching-on of the power switching device without a great switching delay, in particular in order to keep signal paths as short as possible.

9. Coupling arrangement according to any one of claims 6 to 8,
**characterised in that**
- the control unit (304) takes into account at least one switching delay (t_{delay}) of a or the power switching unit (322) in order to be able to switch on the connection of the transformer (316) to the electrical network (320) at a desired switching-on time (tₒₙ) in a precisely timed manner, wherein
- the switching delay is stored in a parameter set in the control unit.

10. Coupling arrangement according to any one of claims 6 to 9, **characterised in that** the control unit (304) has an external signal input (328) in order to be able to receive external control signals.

11. Wind turbine (100) having a coupling arrangement (301) according to any one of claims 6 to 10 and/or prepared to carry out a method according to any one of claims 1 to 5.

12. Wind farm (312) having a plurality of wind turbines (100) and having at least one coupling arrangement (301) according to any one of claims 6 to 10 and/or prepared to carry out a method according to any one of claims 1 to 5.

## Revendications

1. Procédé pour connecter électriquement un transformateur (316) à un réseau électrique (320) présentant une tension de réseau, par l'intermédiaire d'un appareil de commutation de puissance (322), dans lequel
- le transformateur présente un côté primaire (324) et un côté secondaire côté réseau (326), comprenant les étapes consistant à :
- prémagnétiser le transformateur avant d'effectuer la connexion électrique afin d'obtenir un état magnétisé prédéterminé du transformateur ;
- détection d'une courbe d'angle de phase de la tension du réseau ;
- connecter le transformateur au réseau électrique en fermant l'appareil de commutation de puissance, dans lequel
- la fermeture se fait en fonction de l'état magnétisé prédéterminé du transformateur, et
- en fonction de la courbe d'angle de phase détectée, dans lequel
- la fermeture se fait à un angle de mise en marche choisi et
- l'angle de mise en marche est choisi en fonction de l'état magnétisé prédéterminé du transformateur (316) et/ou en ce que
- la fermeture se fait à un moment de mise en marche choisi et le moment de mise en marche
- en fonction de l'état magnétisé prédéterminé du transformateur et
- en fonction de la courbe d'angle de phase détectée, en particulier en ce que le moment de mise en marche est déterminé à partir de l'angle de mise en marche, dans lequel
- un transformateur triphasé (316) est utilisé, et
- le transformateur présente une première, une deuxième et une troisième entrée de phase pour appliquer respectivement une phase, et
- une première tension continue est appliquée entre la première et la deuxième entrée de phase pour la prémagnétisation, et aucune tension n'est appliquée à la troisième entrée de phase, ou
- les deuxième et troisième entrées de phase sont connectées l'une à l'autre de manière à former un nœud commun et la tension continue est appliquée entre la première entrée de phase et ce nœud, et
- le transformateur (316) présente, en fonction de son état magnétisé, une caractéristique de courant de mise en marche dépendant de l'angle de phase, et
- l'angle de mise en marche (φ) ou le moment de mise en marche (tₒₙ) est déterminé en fonction de la caractéristique de courant de mise en marche dépendant de l'angle de phase, dans lequel
- la caractéristique de courant de mise en marche dépendant de l'angle de phase présente au moins une courbe d'un courant de mise en marche d'une phase en fonction de l'angle de phase, et
- la courbe du courant de mise en marche décrit le courant de mise en marche maximal (I₁, I₂, I₃) en fonction de l'angle de phase au moment de mise en marche, et
- l'angle de mise en marche ou le moment de mise en marche est choisi en fonction de cette caractéristique de courant de mise en marche, à savoir de telle sorte qu'
- un courant de mise en marche cumulé (Iₛᵤₘ) est formé en tant que somme des courants de mise en marche maximaux de chaque phase et l'angle de mise en marche ou le moment de mise en marche pour lequel le courant de mise en marche cumulé prend une valeur minimale est choisi en tant qu'angle de mise en marche ou moment de mise en marche par rapport à l'angle de phase, et
- la connexion de l'appareil de commutation de puissance (322) à un moment de mise en marche choisi (tₒₙ) ou à l'angle de mise en marche est effectuée simultanément sur les trois phases au moyen d'une unité de commutation de puissance triphasée,
- dans lequel l'unité de commutation de puissance est mise en marche de manière contrôlée.

2. Procédé selon la revendication 1, **caractérisé en ce que**
- la prémagnétisation du transformateur (316) est effectuée avant la connexion électrique du transformateur au réseau électrique au moins pendant une durée prédéterminée, en particulier de 0,5 seconde, de préférence de 2 secondes, en particulier de 10 secondes, afin d'atteindre la magnétisation prédéterminée du transformateur, et/ou **en ce que**
- la durée de mise en marche est choisie de manière à atteindre au moins 50 % de la magnétisation prédéterminée.

3. Procédé selon la revendication 1 ou 2, **caractérisé en ce que** la fermeture au moment de la mise en marche (tₒₙ) est commandée de telle sorte que
- une fermeture est déclenchée à un moment de déclenchement (t_{switch}) et devient effective à un moment de mise en marche, dans lequel
- le moment de déclenchement est antérieur d'un temps de retard au moment de mise en marche, dans lequel
- dans une première étape, le moment de mise en marche est fixé et
- dans une seconde étape, le moment de déclenchement est fixé en fonction du moment de mise en marche et du temps de retard, dans lequel de préférence la commutation est préparée à un événement de déclenchement, en particulier à une position de phase prédéterminée avant le moment de déclenchement, le moment de déclenchement étant situé à un temps d'avance après l'événement de déclenchement, de sorte que la fermeture est déclenchée au temps d'avance après l'événement de déclenchement.

4. Procédé selon l'une quelconque des revendications précédentes, **caractérisé en ce que**
- en fonction de la caractéristique de courant d'appel dépendant de l'angle de phase, le moment de mise en marche et/ou l'angle de mise en marche est déterminé avant la mise en service du transformateur (316), et
- est enregistré en tant que paramètre dans une unité de commande (304).

5. Procédé selon l'une quelconque des revendications précédentes,
- **caractérisé en ce que**
- le réseau électrique présente une tension de réseau supérieure à 1 kV, dans lequel
- le réseau électrique, de préférence
- est un réseau d'alimentation électrique (120) avec une tension d'environ 110 kV ou
- est un réseau de parc (114) d'un parc éolien avec une tension d'environ 20 kV.

6. Agencement de couplage (301) pour connecter électriquement un transformateur (316) à un réseau électrique (320) présentant une tension de réseau, comprenant :
- un dispositif de prémagnétisation (312) connecté électriquement au transformateur pour prémagnétiser le transformateur avant que la connexion électrique ne soit effectuée afin d'atteindre un état magnétisé prédéterminé du transformateur ;
- un appareil de commutation de puissance (322) connecté entre le transformateur et le réseau électrique pour connecter électriquement le transformateur au réseau électrique,
- un dispositif de détection couplé à l'appareil de commutation de puissance (306) pour détecter une courbe d'angle de phase de la tension du réseau, dans lequel
- l'appareil de commutation de puissance présente une borne de commande pour fermer par son intermédiaire l'appareil de commutation de puissance à un moment de mise en marche pouvant être choisi, afin de connecter le transformateur
- en fonction de l'état magnétisé prédéterminé du transformateur et
- en fonction de la courbe d'angle de phase détectée, au réseau électrique, dans lequel
- l'agencement de couplage (301) est adapté pour mettre en œuvre un procédé selon l'une quelconque des revendications précédentes.

7. Agencement de couplage (301) selon la revendication 6, **caractérisé en ce que**
- au moins un appareil de commande (304) est prévu pour commander l'appareil de commutation de puissance (322) et/ou pour commander l'appareil de prémagnétisation (312) pour prémagnétiser le transformateur.

8. Agencement de couplage selon la revendication 6 ou 7, **caractérisé en ce que**
- l'unité de commande (304) et le dispositif de détection (306)
- réalisent une unité de commutation commune (302), en particulier pour pouvoir effectuer une détection rapide de la courbe de l'angle de phase de la tension de réseau et une mise en marche rapide de l'appareil de commutation de puissance sans retard de commutation élevé, en particulier pour maintenir les trajets de signaux aussi courts que possible.

9. Agencement de couplage selon l'une quelconque des revendications 6 à 8, **caractérisé en ce que**
- l'unité de commande (304) prend en compte au moins un retard de commutation (t_{delay}) d'une ou de l'unité de commutation de puissance (322), afin de pouvoir mettre en marche de manière précise dans le temps la connexion du transformateur (316) au réseau électrique (320) à un moment de mise en marche (tₒₙ) souhaité, dans lequel
- le retard de commutation est enregistré dans un jeu de paramètres dans l'unité de commande.

10. Agencement de couplage selon l'une quelconque des revendications 6 à 9, **caractérisé en ce que**
- l'unité de commande (304) présente une entrée de signal externe (328) pour pouvoir recevoir des signaux de commande externes.

11. Installation à énergie éolienne (100) avec un agencement de couplage (301) selon l'une quelconque des revendications 6 à 10 et/ou préparée pour mettre en œuvre un procédé selon l'une quelconque des revendications 1 à 5.

12. Parc éolien (312) avec plusieurs installations à énergie éolienne (100) et avec au moins un agencement de couplage (301) selon l'une quelconque des revendications 6 à 10 et/ou préparé pour mettre en œuvre un procédé selon l'une quelconque des revendications 1 à 5.
